Europäisches Patentamt

(19) European Patent Office

Office européen des brevets

(11) Numéro de publication: **0 221 404**
**B1**

(12) **FASCICULE DE BREVET EUROPEEN**

(45) Date de publication du fascicule du brevet: **16.05.90**

(51) Int. Cl.⁵: **H 02 K 55/04**

(21) Numéro de dépôt: **86114215.6**

(22) Date de dépôt: **14.10.86**

(54) Machine synchrone à enroulements supraconducteurs.

(30) Priorité: **17.10.85 FR 8515416**

(43) Date de publication de la demande:
**13.05.87 Bulletin 87/20**

(45) Mention de la délivrance du brevet:
**16.05.90 Bulletin 90/20**

(84) Etats contractants désignés:
**AT BE CH DE ES FR GB GR IT LI LU NL SE**

(56) Documents cités:
**DE-A-3 207 061**
**FR-A-2 275 053**
**FR-A-2 372 535**
**FR-A-2 439 500**
**GB-A-1 455 818**

(73) Titulaire: **GEC ALSTHOM SA**
**38, avenue Kléber**
**F-75116 Paris (FR)**

(72) Inventeur: **Laumond, Yves**
**3 rue des Champs Andelnans**
**F-90400 Danjoutin (FR)**
Inventeur: **Sabrié, Jean-Louis**
**5 Domaine du Salbert Cravanche**
**F-90300 Valdoie (FR)**

(74) Mandataire: **Weinmiller, Jürgen et al**
**Lennéstrasse 9 Postfach 24**
**D-8133 Feldafing (DE)**

## Description

La présente invention concerne une machine synchrone à rotor solidaire d'un arbre porté par des paliers, à enroulements stator et rotor supraconducteurs refroidis par de l'hélium à très basse température, chacun des enroulements et l'entrefer étant dans une enceinte sous vide.

Pour réduire les pertes thermiques, il y a lieu de maintenir le stator, le rotor et l'entrefer sous vide, le stator et le rotor devant être chacun sous un vide poussé, de l'ordre de $10^{-4}$ millibar, le vide régnant dans l'entrefer pouvant être notablement moins poussé, son rôle étant essentiellement de diminuer les pertes par frottement. On prévoit un pompage permanent sur le stator pour y maintenir le vide poussé. Le rotor est de préférence sous un vide scellé. Mais il apparaît lors du refroidissement de la machine une contraction différentielle très importante entre la partie chaude du rotor au voisinage de l'entrefer et sa partie froide, devant être portée aux environs de 4°K, par exemple par une circulation d'hélium au-dessus de sa pression critique. Ceci impose de le munir d'organes permettant d'absorber cette contraction différentielle et complique sa construction. Enfin, compte tenu des contractions différentielles du stator et du rotor, l'entrefer doit présenter une épaisseur notable. Des machines électriques supra-conductrices sont décrites dans les fascicules de brevet GB-A-1455818, FR-A- 2275053, FR-A- 2372535 et FR-A-2439500.

La présente invention a pour but de procurer une machine synchrone présentant un système de réfrigération et un rotor de construction plus simple et dont l'entrefer puisse être faible.

La machine synchrone selon l'invention est caractérisée en ce que les enroulements du stator et du rotor et l'entrefer sont disposés dans une enceinte commune reliée à une source de vide commune, et en ce que l'entrefer est séparé des paliers par des joints à huile résistant au vide et par des pièges froids cryogéniques.

Elle répond en outre de préférence à au moins l'une des caractéristiques suivantes:

L'induit est entouré d'un bain d'hélium liquide.

L'inducteur est contenu dans une enceinte dans laquelle circule un flux d'hélium hypercritique.

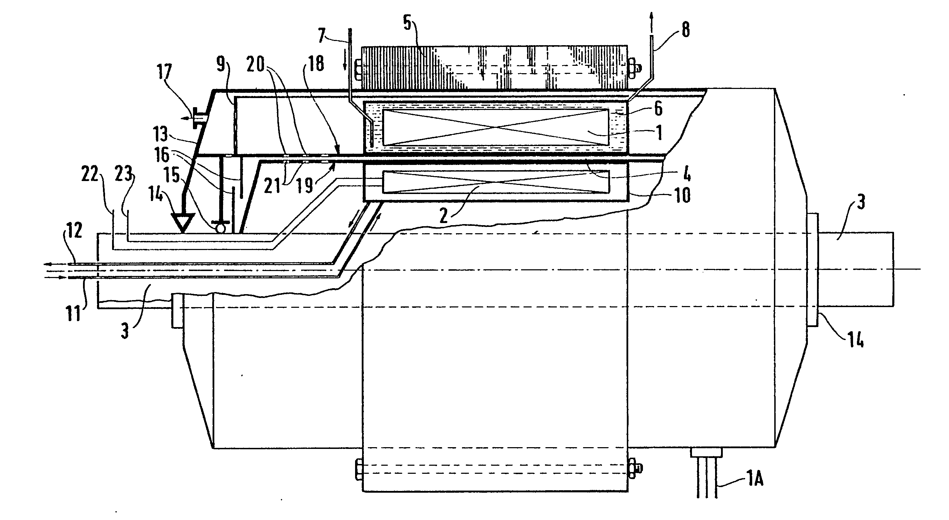

Il est décrit ci-après, à titre d'exemple et en référence à la figure unique du dessin annexé, un alternateur synchrone à enroulements stator et rotor supraconducteurs selon l'invention, représenté partiellement en élévation avec coupe partielle.

L'alternateur comprend des enroulements statoriques triphasés en matériau supraconducteur 1 et des enroulements rotoriques 2 également supraconducteurs. Du stator partent des conducteurs triphasés IA vers l'utilisation. Le rotor est porté par un arbre 3, et sa périphérie est séparée du stator par un entrefer 4. Autour du stator est disposé un circuit magnétique feuilleté 5, empêchant le flux magnétique de sortir de la machine.

Les enroulements statoriques sont maintenus dans un bain d'hélium liquide 6 à 4,2 d° K, l'hélium liquide étant introduit dans le bain par un conduit 7 et les vapeurs d'hélium formées étant évacuées par le conduit 8. Autour de ces enroulements est disposé un écran thermique 9 formé de feuilles réfléchissantes séparées par des voiles isolants.

Les enroulements rotoriques sont contenus dans une enceinte 10 dans laquelle circule un flux d'hélium au-dessus de sa pression critique, par exemple sous 3 bars et à 4,7 d° K, introduit par le conduit 11 et évacué après réchauffage par le conduit 12. Ces enroulements sont reliés à un réseau d'alimentation par des conducteurs 22, 23.

L'étanchéité des amenée et évacuation de l'hélium peut être assurée par exemple par un joint tournant, non représenté, tel que celui qui a fait l'objet du brevet FR-A-2 319 233 du 22 Juillet 1975. et de son certificat d'addition FR-A-2.371.806 du 13 Juillet 1977, aux noms de la demanderesse et d'Electricité de France. Un joint résistant au vide est décrit dans le fascicule de brevet DE-A-3207061.

L'ensemble du stator du rotor est contenu dans une enveloppe commune 13 portant des paliers 14 de support de l'arbre 3 du rotor. L'intérieur de l'enveloppe 13 est séparé de l'atmosphère ambiante par des joints à huile tenant au vide 15, derrière lesquels sont disposés des pièges froids à vapeurs d'huile 16.

L'enceinte intérieure à l'enveloppe 13, contenant le stator, le rotor et l'entrefer, est reliée à une source de vide commune 17. Le stator est séparé de l'entrefer par un tube de transition thermique et de transmission du couple 18, et le rotor par un tube 19. Ceux-ci sont percés d'ouvertures 20, 21 assurant la communication du vide du stator à l'entrefer et au rotor.

## Revendications

1. Machine synchrone à rotor solidaire d'un arbre porté par des pailes, à enroulements stator (1) et rotor (2) supraconducteurs refroidis par de l'hélium à très basse température, chacun des enroulements et l'entrefer (4) étant dans une enceinte sous vide, caractérisée en ce que les enroulements du stator et du rotor et l'entrefer sont disposés dans une enceinte commune (13) reliée à une source de vide commune (17), et en ce que l'entrefer (4) est séparé des paliers (14) de l'arbre (3) du rotor par des joints à huile résistant au vide (15) et par des pièges cryogéniques (16).

2. Machine selon la revendication 1, caractérisée en ce que l'induit (1) est entouré d'un bain d'hélium liquide (6).

3. Machine selon les revendications 1 ou 2, caractérisée en ce que l'inducteur (2) est contenu dans une enceinte 10 dans laquelle circule un flux d'hélium hypercritique.

## Patentansprüche

1. Synchronmaschine mit einem Rotor, der fest mit einer auf Lagern getragenen Welle verbunden ist, mit supraleitenden Stator- (1) und Rotorwicklungen (2), die mit Helium auf sehr tiefe Temperatur gekühlt werden, wobei jede der Wicklungen und der Luftspalt (4) sich in einem Vakuumraum befinden, dadurch gekennzeichnet, daß die Wicklungen des Stators und die des Rotors und der Luftspalt sich in einem gemeinsamen Raum (13) befinden, der mit einer gemeinsamen Vakuumquelle (17) verbunden ist, und daß der Luftspalt (4) von den Lagern (14) der Welle (3) durch vakuumfeste Öldichtungen (15) und durch kryogenische Kühlfallen (16) getrennt ist.

2. Maschine nach Anspruch 1, dadurch gekennzeichnet, daß die Statorwicklung (1) von einem Bad flüssigen Heliums (6) umgeben ist.

3. Maschine nach den Ansprüchen 1 oder 2, dadurch gekennzeichnet, daß der Induktor (2) in einem Raum (10) enthalten ist, in dem hyperkritisches Helium umläuft.

**Claims**

1. A synchronous machine having a rotor which is fixed to a shaft supported in bearings, with superconducting stator (1) and rotor windings (2) cooled by helium to very low temperature, each of the windings and the magnetic gap (4) being in a vacuum enclosure, characterized in that the windings of the stator and the rotor and the magnetic gap are disposed in a common enclosure (13) connected to a common vacuum source (17), and in that the magnetic gap (4) is separated from the bearings (14) of the shaft (3) by vacuum-proof oil seals (15) and by cryogenic traps (16).

2. A machine according to claim 1, characterized in that the stator winding (1) is surrounded by a bath of liquid helium (6).

3. A machine according to claims 1 or 2, characterized in that the inductor (2) is contained inside an enclosure (10) in which circulates a flow of hypercritical helium.